# EUROPEAN PATENT APPLICATION

(11) **EP 2 829 784 A1**
(43) Date of publication of application: **28.01.2015**
(21) Application number: 14290218.8
(22) Date of filing: 25.07.2014
(51) Int. Cl.: F16L 37/252, F16L 37/52

(54) **Coupling segment and coupling arrangement for pipes**

(30) Priority: 25.07.2013 DE 102013012369
(71) Applicant: MANN+HUMMEL GmbH, 71638 Ludwigsburg (DE)
(72) Inventor: Marteau, Christophe, 53000 Laval (FR); Bedouet, Cécile, 53810 Changé (FR)

(57) **Abstract**

The invention relates to a coupling arrangement (10) having a first coupling body (20) and a second coupling body (40), one of the coupling bodies (40) being insertable with a body portion (42) into the other of the coupling bodies (20) with its front end (48) through a front end (32) of the receiving coupling body (20). The coupling bodies (20, 40) provide corresponding catching means (60, 80) for establishing a twist-lock type connection between the coupling bodies (20, 40), the catching means (60, 80) providing a mutual first geometrical position for introducing the insertable coupling body (40) into the receiving coupling body (20). The catching means (60, 80) provide a mutual second geometrical position for locking the catching means (60, 80), and one or more segments (21, 23, 41, 43) of the first and second coupling bodies (20, 40) provide corresponding spherical surface areas so that the first and second coupling bodies (20, 40) are tiltable with respect to each other in a locked state of the twist-lock type connection.

## Description

### Technical Field

The invention relates to a coupling and a coupling arrangement for pipes, in particular for establishing a quasi-rigid connection between pipes, particularly for the use at an internal combustion engine, particularly in a vehicle, and an air duct with the claimed coupling arrangement.

### Prior Art

EP 2286132 A1 discloses a coupling arrangement for pipes, where a pipe sleeve connects a male and a female pipe part. The pipe sleeve cooperates with an inner contour of the female pipe part for establishing an articulated pipe joint with a pipe being arranged in a pipe receptacle of the female pipe part. The pipe receptacle comprises a pipe stop consisting of segments which protrude from an inner wall of the pipe sleeve.

### Disclosure of the Invention

It is an object of the invention to provide an economic coupling arrangement which is easy to mount and which is particularly useful for quasi-rigid connections between pipes.

Another object is to provide a coupling segment for establishing a quasi-rigid connection between pipes.

According to a first aspect of the invention the object is achieved by a coupling arrangement having a first and a second coupling segment where one of the coupling segments is insertable into the other coupling segment, where the coupling segments provide corresponding catching means forming a twist-lock-type connection, the catching means providing a geometrical position for introducing the respective coupling segment into the other coupling segment and providing a geometrical position for locking the catching means, and where a tilting movement between the coupling segments with respect to each other is confined within defined limits.

The other claims, the description and the drawings describe advantageous embodiments of the invention.

A coupling arrangement having a first coupling body and a second coupling body is proposed, where an insertable portion of one of the coupling bodies is insertable into the other of the coupling bodies with its front end through a front end of the receiving coupling body. The coupling bodies provide corresponding catching means for establishing a twist-lock type connection between the coupling bodies. The catching means provide a mutual first geometrical position for introducing the insertable coupling body into the receiving coupling body. The catching means provide a mutual second geometrical position for locking the catching means and one or more segments of the first and second coupling bodies provide corresponding spherical surface areas so that the first and second coupling bodies are tiltable with respect to each other in a locked state of the twist-lock type connection.

The catching means may be configured as dented structures with protrusions spaced apart by recesses which allows inserting the insertable coupling body into the receiving coupling body when an alignment of the coupling bodies is established so that protrusions of the catching means of one coupling body are able to pass through the recesses of the catching means of the other coupling body when the coupling bodies are brought together. In the locking position, the protrusions of the catching means of one coupling body overlap the protrusions of the catching means of the other coupling body in an axial direction. After the insertable coupling body is accommodated in the receiving coupling body, the locking position can be taken by a relative twist movement between the coupling bodies.

Advantageously, the number of components necessary for establishing a coupling between two pipes is reduced. No additional coupling parts are required besides the two coupling bodies. In case a seal is desired between the coupling parts, a seal such as an O-ring may be provided. The connection between the coupling bodies is flexible and allows tilting between the coupling elements. In one embodiment of the invention, a translational movement may also be possible.

The inventive coupling arrangement is cost efficient because only few components are required for establishing the coupling between pipes. The coupling arrangement is a compact solution. Because no additional fixing parts are necessary, the coupling bodies can be manufactured with minimum clearance between the coupling bodies. This allows for an improved stiffness of the coupling arrangement.

The coupling arrangement is particular suitable for rigid or quasi-rigid connection between pipes such as charge air ducts for vehicles or connections with high temperature load or pressure load without large dynamic movements. The coupling arrangement can easily compensate movements present during mounting of the coupling arrangement and/or position tolerances or connecting points of the coupling arrangement. Length differences of a few millimeters, particularly less than 5 mm, more particularly less than 4 mm, as well as angle deviations of a few degrees, particularly less than 5°, more particularly less than 3°, can be compensated without introducing unidirectional mechanical stress into the coupling arrangement.

According to a favorable embodiment the both coupling bodies each may comprise at least two segments, one proximal segment proximal to the front end and one distal segment in a distance from the front end, where the catching means of the insertable coupling body are arranged at its distal segment and the catching means of the receiving coupling body are arranged at its proximal segment. In particular, the catching means may be configured as a spherical part of a ball joint. Favorably, the coupling elements form a flexible connection which allows tilting one coupling element with respect to the other coupling element. The spherical surfaces of the catching means provide control surfaces for a relative tilt movement of the one coupling body with respect to the other coupling body when the respective catching means are in contact and at the same time serve as stopping elements so that the coupling elements cannot disengage from one another.

According to a favorable embodiment the distal segment of the receiving coupling body and the proximal segment of the insertable coupling body may be configured as a sealing area where a seal is arranged between the segments. In particular at least one of the segments may be provided with a groove for holding the seal. For instance, the groove for accommodating the seal such as an O-ring may be arranged in the external surface of the insertable coupling body facing the internal surface of the receiving coupling body. Alternatively, the groove may be arranged in the internal surface of the receiving coupling body facing the external surface of the insertable coupling body.

According to a favorable embodiment the catching means of the receiving coupling body may be provided with an undercut for cooperating with the catching means of the insertable coupling body. The undercut may serve as a stopping element against disengagement of the coupling arrangement as well as a control surface for a tilt movement between the coupling bodies.

According to a favorable embodiment the proximal segment of the insertable coupling body may have a smaller clear diameter than the distal segment, thus facilitating inserting the insertable coupling body into the receiving coupling body. The proximal segment may have different shapes in different embodiments, such as a ball joint like shape or a cylindrical shape.

According to a favorable embodiment both the proximal and the distal segments of the insertable coupling body may be each generally configured as a portion of a ball of a ball joint. Each ball portion may serve as a control surface for a tilt movement between the coupling bodies where the catching means can glide on each other.

According to a favorable embodiment both the proximal and the distal segments of the receiving coupling body may be each generally configured as a portion of a socket of a ball joint. Each ball joint portion may serve as a gliding surface for a tilt movement between the coupling bodies.

According to a favorable embodiment the distal segment of the insertable coupling body may be configured as a portion of a ball of a ball joint and the proximal segment of the insertable coupling body may have a generally cylindrical shape. This connection may allow a rotational movement between the coupling bodies about a longitudinal axis additional to a tilt movement. Further, the cylindrical shape of the segment may allow for a translational movement of the coupling bodies in their locked state.

According to a favorable embodiment the proximal segment of the receiving coupling body may be configured generally as a portion of a socket of a ball joint and the distal segment of the receiving coupling body may have a generally cylindrical shape. In particular, the distal segment of the receiving coupling body may be deeper in an axial direction than an axial extension of an inserted portion of the insertable coupling body in a mounted state. Favorably, a relative translational movement of the coupling bodies is possible in the locked state of the coupling arrangement.

According to a favorable embodiment the catching means may be configured to establish a bayonet-type connection. A reliable and safe connection is possible.

According to a favorable embodiment locking elements for stopping a relative rotational movement between the coupling bodies may be arranged at the outside or inside of the coupling bodies. The locking elements may have a fixed locked position or may have a locked position with an inherent rotational clearance.

According to another aspect of the invention a coupling body for usage in a coupling arrangement is proposed, comprising at least two segments, with one proximal segment proximal to a front end and one distal segment in a distance from the front end, the coupling body being configured as a receiving coupling body of the described coupling arrangement, where a catching means is arranged at its proximal segment, and the catching means being configured as a spherical socket part of a ball joint.

According to another aspect of the invention a coupling body for usage in a coupling arrangement is proposed, comprising at least two segments, with one proximal segment proximal to a front end and one distal segment in a distance from the front end, the coupling body being configured as an insertable coupling body of the described coupling arrangement, where a catching means is arranged at its distal segment, and the catching means being configured as a part of a ball of a ball joint.

According to another aspect of the invention a usage of a coupling arrangement is proposed for establishing a quasi-rigid connection between gas pipes, in particular for charge air ducts.

### Brief Description of the Drawings

The present invention together with the above-mentioned and other objects and advantages may best be understood from the following detailed description of the embodiments, but not restricted to the embodiments, wherein is shown in:
- Figure 1: an example embodiment of a charge air duct of a combustion engine with two coupling arrangements according to the invention;
- Figure 2: in an isometric view a first embodiment of a coupling arrangement according to the invention having a spherical socket for allowing a relative tilting movement between the coupling bodies;
- Figure 3: in an isometric view a further embodiment of a coupling arrangement according to the invention having a cylindrical socket for allowing a relative tilting movement and a relative translational movement between the coupling bodies;
- Figure 4: in an isometric view the two coupling bodies according to the first embodiment of the coupling arrangement shown in Figure 2 before connecting the coupling bodies;
- Figure 5: in an exploded view the two coupling bodies according to the first embodiment of the coupling arrangement shown in Figure 2;
- Figure 6: in a cut view the coupling arrangement according to the first embodiment of the coupling arrangement shown in Figure 2 in a straight alignment;
- Figure 7: in a cut view the coupling arrangement according to the first embodiment of the coupling arrangement shown in Figure 2 in a tilted position;
- Figure 8: in a top view the coupling arrangement according to the first embodiment of the coupling arrangement shown in Figure 2 in a mounting position;
- Figure 9: in a top view the coupling arrangement according to the first embodiment of the coupling arrangement shown in Figure 2 in a locked position;
- Figure 10: in an isometric view the two coupling bodies according to the further embodiment of the coupling arrangement shown in Figure 3 before connecting the coupling bodies;
- Figure 11: in an exploded view the two coupling bodies according to the further embodiment of the coupling arrangement shown in Figure 3;
- Figure 12: in a cut view the coupling arrangement according to the further embodiment of the coupling arrangement shown in Figure 3 in a straight alignment having a free space in the socket;
- Figure 13: in a cut view the coupling arrangement according to the further embodiment of the coupling arrangement shown in Figure 3 abutting at the end of the socket;
- Figure 14: in a cut view the coupling arrangement according to the further embodiment of the coupling arrangement shown in Figure 3 in a tilted position;
- Figure 15: in a top view the coupling arrangement according to the further embodiment of the coupling arrangement shown in Figure 3 in a mounting position; and
- Figure 16: in a top view the coupling arrangement according to the further embodiment of the coupling arrangement shown in Figure 3 in a locked position.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

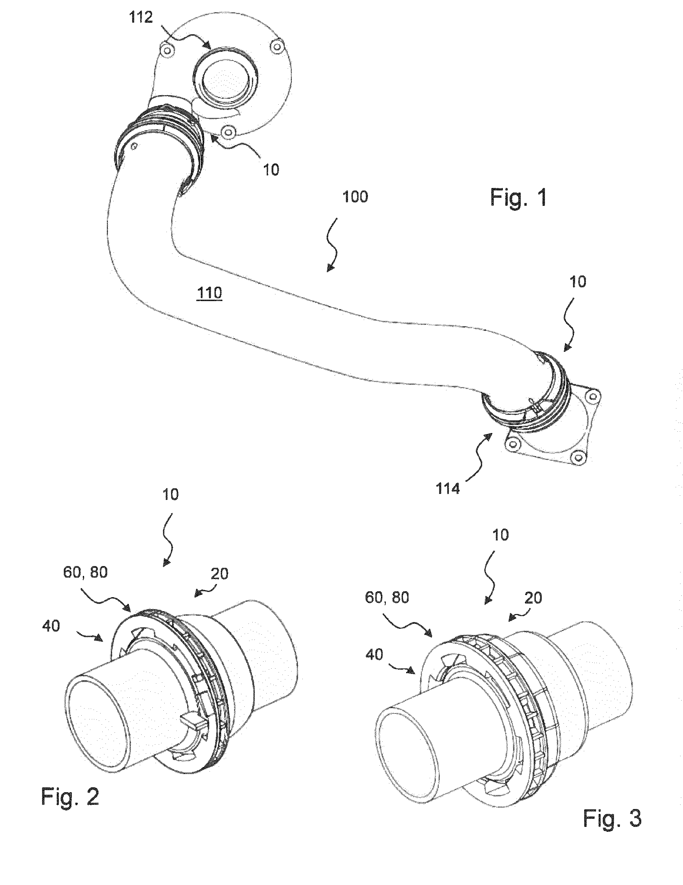

Figure 1 illustrates an example embodiment of a charge air duct 100 of a combustion engine with two coupling arrangements 10 according to an example embodiment of the invention arranged at both ends of a charge air pipe 110. The charge air pipe 110 is connected at a first coupling point 112 to a first pipe segment via the first coupling arrangement 10 and at a distant coupling point 114 to another pipe segment via the other coupling arrangement 10.

The charge air pipe 110 may be equipped at both ends with identical coupling arrangements 10 or, alternatively, with one coupling arrangement 10 according to the invention at one end and one different coupling arrangement at the opposing end.

Under normal operation conditions the charge air duct arrangement is quasi rigid, i.e. during operation it is not intended for dynamic movements but is practically immobile.

The coupling arrangement 10 provides a connection between pipes allowing for a certain albeit small movability between the pipes. The coupling arrangement 10 allows for compensation of small movements between the front ends of the pipes such as a relative lateral movement between the pipes which may result in a tilt angle of up to 2,5° and a length offset between the front ends of a few millimeters, in particular of up to ± 3 mm. The angular and length differences are not compensated in a dynamic way, but the coupling arrangement 10 serves as a compensating element for assembly and for compensating tolerances between two connections.

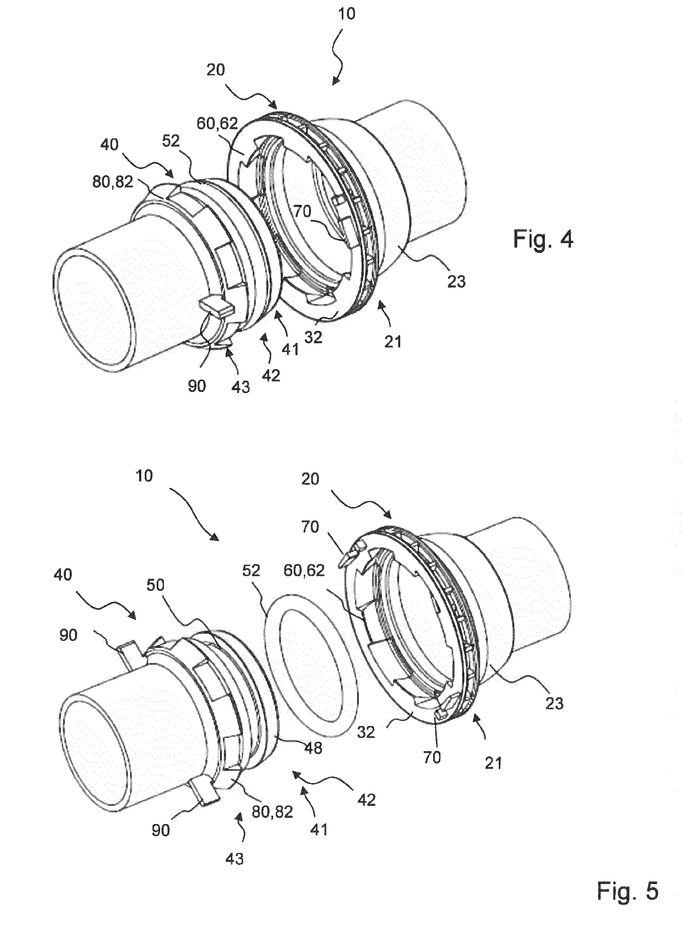

Figure 2 depicts a first embodiment of a coupling arrangement 10, generally configured as a ball joint, and comprising a first coupling body 20 and an insertable second coupling body 40, connected via catching means 60, 80. This embodiment is described in detail in Figures 4 to 9.

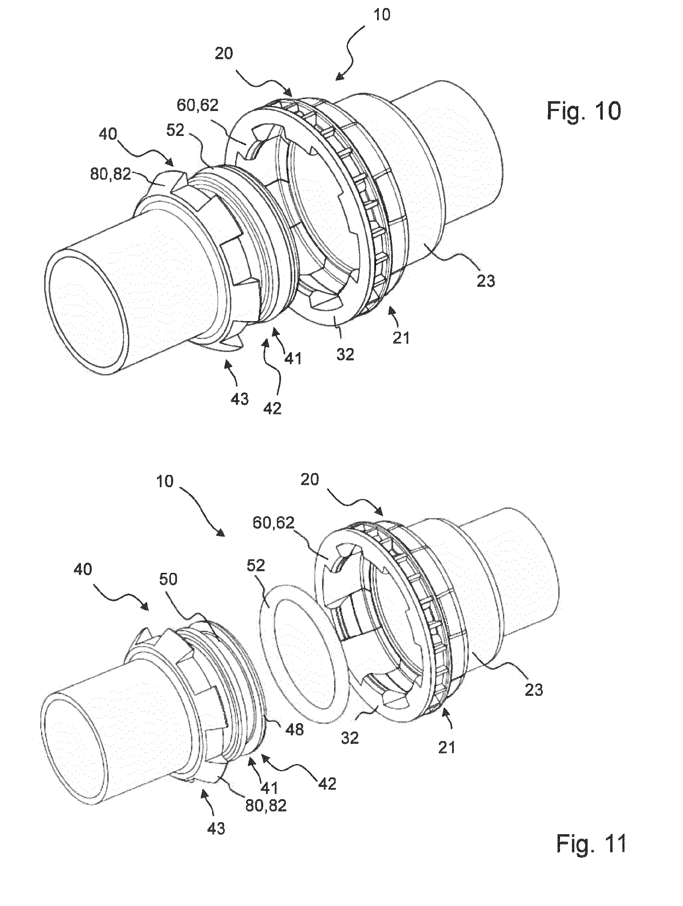

Figure 3 depicts a further embodiment of a coupling arrangement 10, generally configured as a partial ball joint with a partial cylindrical socket, and comprising a first coupling body 20 and an insertable second coupling body 40, connected via catching means 60, 80. This embodiment is described in detail in Figures 10 to 16.

Figure 4 depicts an isometric view of the two coupling bodies 20, 40 according to the first embodiment of the coupling arrangement 10 shown in Figure 2 before connecting the coupling bodies 20, 40, while Figure 5 depicts an exploded view of the two coupling bodies 20, 40 according to the first embodiment of the coupling arrangement 10. The coupling bodies 20, 40 both have a circular cross section.

Generally, the coupling bodies 20, 40 of the embodiments are equipped with tube-like collars which can be connected to pipes by welding or other suitable techniques.

In the drawing, the coupling bodies 20, 40 face each other with their respective front ends 32 (first coupling body 20) and 48 (second coupling body 40). The first coupling body 20 is intended to receive the second, insertable coupling body 40. A portion 42 of the insertable coupling body 40 is intended to be completely inserted into the first coupling body 20 in the mounted state of the coupling arrangement 10.

The insertable coupling body 40 comprises two segments 41, 43, one proximal segment 41 proximal to the front end 48 and one distal segment 43 in a distance from the front end 48. The catching means 80 of the insertable coupling body 40 are arranged at its distal segment 43.

Likewise, the receiving coupling body 20 comprises two segments 21, 23, one proximal segment 21 proximal to the front end 32 and one distal segment 23 in a distance from the front end 32. The catching means 60 of the receiving coupling body 20 are arranged at its proximal segment 21.

The distal segment 23 of the receiving coupling body 20 and the proximal segment 41 of the insertable coupling body 40 are configured as a sealing area where a seal 52 is arranged between the segments 23, 41. In this example embodiment, the proximal segment 41 of the insertable coupling body 40 has a groove 50 for holding an O-ring seal 52. In operation, a pressure of a fluid passing through the coupling arrangement 10 improves the sealing function of the seal as the inserted coupling body 40 is expanded by the internal fluid pressure and fixedly pressed against the sealing surface of the receiving coupling body 20.

The proximal and distal segments 21, 23 of the receiving coupling body 20 have different diameters. The proximal segment 21 has a larger diameter at the front end 32 than the distal segment 23. Likewise, the proximal and distal segments 41, 43 of the insertable coupling body 40 have different diameters. The proximal segment 41 has a smaller outer diameter at the front end 48 than the distal segment 43.

The catching means 60, 80 of both coupling bodies 20, 40 are configured as toothed rings with protrusions 62, 82 spaced apart by recesses. The protrusions 62 of the receiving coupling body 20 each provide an undercut with a spherically shaped surface. The protrusions 82 of the insertable coupling body 40 each provide an upper surface which is spherically shaped. Thus, the upper surfaces and undercuts of corresponding protrusions 62, 68 form the spherical parts of a ball joint.

The undercut of the protrusions 62 have virtually the same extension in axial direction as the upper surfaces of the protrusions 82.

Further, the insertable portion 42 of the insertable coupling body 40 has a spherical surface which corresponds to a spherical surface of the distal segment 23 of the receiving coupling body 20.

Both the proximal and the distal segments 21, 23 of the receiving coupling body 20 are each generally configured as a portion of a socket of a ball joint and cooperate with the respective ball portions of the insertable coupling body 40 which allows tilting the coupling bodies 20, 40 with respect to each other by a few degrees.

The coupling bodies 20, 40 provide corresponding locking elements 70, 90 at their external surfaces for preventing a rotational movement of the coupling bodies 20, 40 relative to each other and for preventing disengagement of the connection. The locking elements 90 of the insertable coupling body 40 are formed by panes protruding in a radial direction. In the example embodiment two panes are arranged diametrically at the shell surface of the insertable coupling body 40.

The locking elements 70 of the receiving coupling body 20 are arranged at its front end 32 having a ramp like element 72 and an end stop 74 with a free space between the two elements. The free space is intended to accommodate the locking element 90. After inserting the insertable coupling body 40 into the receiving coupling body 20, the connection between the two bodies 20, 40 is locked by performing a twisting movement of the coupling bodies 20, 40 with respect to each other. The panes slide over their corresponding ramp elements 72 and enter the small spaces between the ramp elements 72. Each pane is locked between the ramp element 72 and the end stop 74, and, hence, the connection between the coupling bodies 20, 40 is locked.

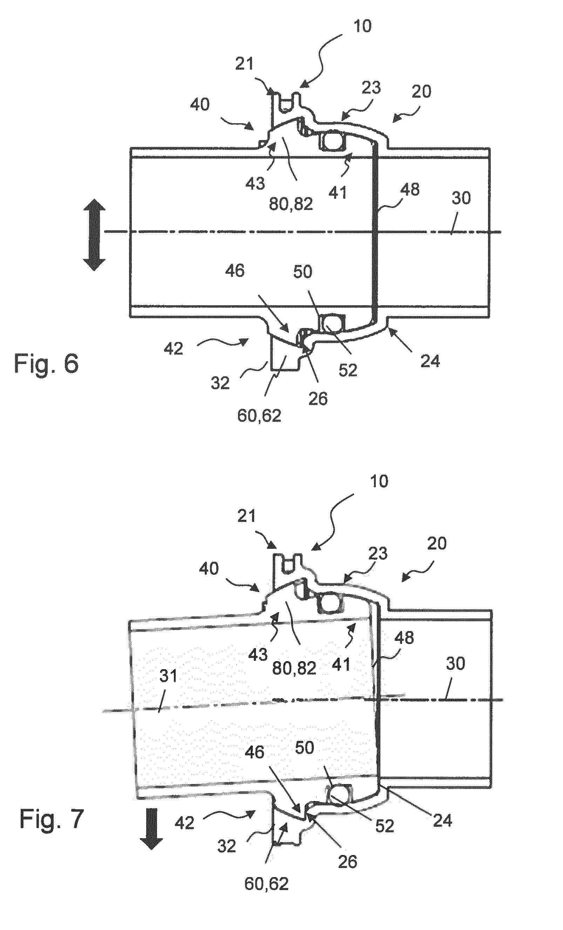

As can be seen in Figures 6 and 7 in more detail, the coupling arrangement 10 allows for tilting the coupling bodies 20, 40 in the locked state. Figure 6 shows a cut view through the coupling arrangement 10 according to the first embodiment shown in the previous Figures 2, 4, 5 in a straight alignment of the coupling bodies 20, 40 and highlights the ball joint characters of the corresponding proximal and distal segments 21, 43, and 41, 23 of the coupling bodies. The coupling bodies 20, 40 may be tilted away from a linear axis 30. The tilt movement is indicated as up or down illustrated by a bold double arrow in the drawing. Because of the rotational symmetry of the coupling arrangement 10, the tilt movement can also be crosswise to the paper plane in all 360° about the axis 30.

Figure 7 shows a cut view through the coupling arrangement 10 according to the first embodiment shown in the previous Figures 2, 4 to 6 where one of the coupling bodies 20, 40 is tilted downward with respect to the other, indicated by a bold arrow in the drawing.

As can be seen in the cut views, while an translational movement of the coupling bodies 20, 40 is blocked by the catching means 60, 80, tilting one of the coupling bodies 20, 40 with respect to the other is possible and still maintaining the sealing function of the seal 52.

The longitudinal extension of the segments 21, 23, 41, 43 correspond to each other so that a translational movement of the insertable coupling body 40 in the receiving coupling body 20 is prohibited. The proximal segment 21 and the distal segment 43 are virtually equal in axial extension along the axis 30 but for a minute free space which is needed for tilting one of the two coupling bodies 20, 40 with respect to the other. The same or similar length difference is also present between the proximal segment 41 and the distal segment 23 for the same reason.

The size of the extension of the distal segment 23 of the receiving coupling body 20 and the proximal segment 41 of the insertable coupling body 40 are selected in a way that the seal 52 is still in the sealing area of the coupling arrangement 10 when the tilt angle between the longitudinal axis 30 and the tilt axis 31 is at its maximum.

A step 46 is present at the interface between the distal segment 43 and the proximal segment 41 of the insertable coupling body 40 due to the different outer clear diameters of the segments 41, 43 as described above.

A corresponding shoulder 26 is present at the interface between the proximal segment 21 and the distal segment 23 of the receiving coupling body 20 due to the different internal clear diameters of the segments 21, 23 as described above. Further, a shoulder 24 is present at the interface between the distal segment 23 and the tube-like collar of the coupling body 20.

When the coupling arrangement 10 is aligned straight, a small clearance is present between the shoulder 26 and the step 46.Tilting is limited by interaction of the step 46 and the shoulder 26. The shoulder 26 serves as an end stop for a tilting movement. Similarly, the front end 48 of the insertable coupling body 40 is blocked by the shoulder 24 of the receiving coupling body 20.

The shoulders 24, 26 and the step 46 are rotationally symmetric, i.e. they are rings in the respective coupling bodies 20, 40.

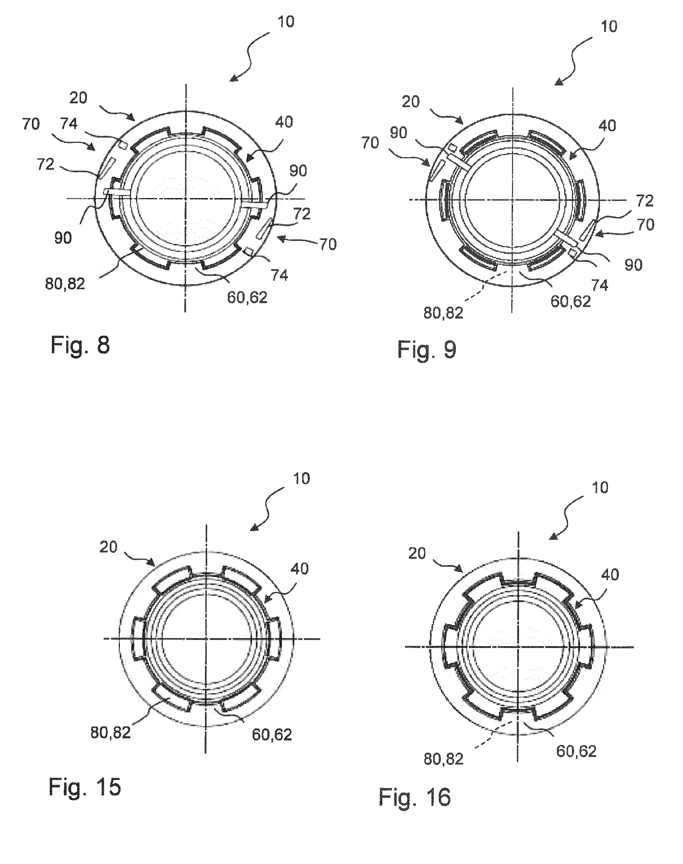

Figures 8 and 9 display in a top view the coupling arrangement 10 according to the first embodiment in a mounting position (Figure 8) and in a locked position (Figure 9).

The insertable coupling body 40 is moved into the receiving coupling body 20 and the outward pointing protrusions 82 of the catching means 80 pass through recesses between the inward pointing protrusions 62 of the catching means 60. When the catching means 80 have passed the catching means 60, the insertable coupling body 40 is rotated with respect to the receiving coupling body 20 and the protrusions 82 move under the protrusions 62. Simultaneously with the rotation, the locking elements 90 slide along the ramp elements 72 of the locking elements 70 until they snap over and further rotation is blocked by the end stops 74 and the coupling bodies 20, 40 are in a locked position. The free space between the ramp element 72 and the end stop 74 still allows a minute rotational freedom in the locked position.

Figures 10 to 16 depict details of the further embodiment of a coupling arrangement 10 shown in Figure 3. The coupling bodies 20, 40 of the further embodiment are configured nearly identical to the coupling bodies 20, 40 of the first embodiment except that the distal segment 23 of the receiving body 20 and the proximal segment 41 of the insertable body 40 are different from the first embodiment and except for an alteration in the proximal segment 21 the receiving coupling body 20.

Therefore the description is focused on the differences between the embodiments. For a description of other elements explicit reference is made to the description of the previous Figures 2, 4 to 9 in order to avoid unnecessary repetitions. The respective description is included in the description of the further embodiment.

As can be seen in the isometric view of Figure 10 depicting the two coupling bodies 20, 40 before contact and in the exploded view of Figure 11, the coupling arrangement 10 according to the further embodiment allows for a translational movement additional to the tilt movement of the coupling arrangement 10.

The distal segment 23 of the receiving coupling body 20 is now of cylindrical shape and not of spherical shape. The proximal segment 21 has a larger extension in axial direction.

The proximal segment 41 of the insertable coupling body 40 has a groove for holding a seal 52 which is closer to the front end 48 than in the first embodiment. The proximal segment 41 has a recess between the groove section enclosing the groove 50 for holding the seal 52 and the step 46. The groove section serves as a ball section to allow for tilting.

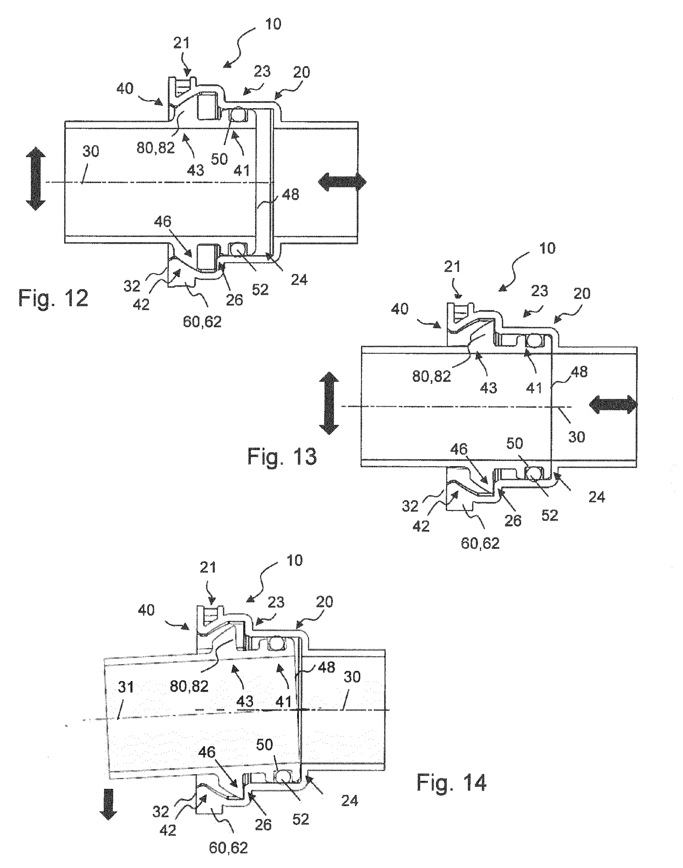

The differences are clearly identified in the cut views of the coupling arrangement 10 in Figures 12 to 14, where Figures 12 and 13 depict a straight alignment in a maximum (Figure 12) translational position and in a minimum (Figure 13) translational position, and Figure 14 depicts the tilted position in the case of minimum translational position. Additional to the tilt movement (indicated by a bold double arrow pointing up and down in the drawings, but can be performed 360° about the axis 30) a translation movement along the longitudinal axis 30 is possible, indicated by a bold horizontal double arrow. Because of the translational movability of the coupling bodies 20, 40 relative to each other along the axis 30, the distal segment 23 of the receiving coupling body 20 has a much longer extension along the longitudinal axis 30 than the proximal segment 41 of the insertable coupling body 40, and the proximal segment 21 of the receiving coupling body 20 is much longer than the distal segment 43 of the insertable coupling body 40.

In the tilted case in Figure 14 it can be seen that tilting stopped by interaction of the step 46 and the shoulder 26 and by interaction of the front end 48 and the shoulder 24 in the minimum translational position. Tilting in other translational positions (not shown) is also possible.

Figures 15 and 16 display in a top view the coupling arrangement 10 according to the first embodiment in a mounting position (Figure 15) and in a locked position (Figure 16).

The procedure of inserting and locking the coupling arrangement 10 to provide a twist-lock connection follows the procedure described in Figures 8 and 9. Locking elements 70, 90 (Figures 8 and 9) as in the first embodiment are not shown, but may be provided if desired.

## Claims

1. A coupling arrangement (10) having a first coupling body (20) and a second coupling body (40), where
(i) one of the coupling bodies (40) being insertable with a body portion (42) into the other of the coupling bodies (20) with its front end (48) through a front end (32) of the receiving coupling body (20),
(ii) the coupling bodies (20, 40) providing corresponding catching means (60, 80) for establishing a twist-lock type connection between the coupling bodies (20, 40), the catching means (60, 80) providing a mutual first geometrical position for introducing the insertable coupling body (40) into the receiving coupling body (20),
(iii) the catching means (60, 80) providing a mutual second geometrical position for locking the catching means (60, 80), and
(iv) one or more segments (21, 23, 41, 43) of the first and second coupling bodies (20, 40) provide corresponding spherical surface areas so that the first and second coupling bodies (20, 40) are tiltable with respect to each other in a locked state of the twist-lock type connection.

2. The coupling arrangement according to claim 1, where the both coupling bodies (20, 40) each comprise at least two segments (21, 23, 41, 43), one proximal segment (21, 41) proximal to a front end (32, 48) and one distal segment (23, 43) in a distance from the front end (32, 48), where the catching means (80) of the insertable coupling body (40) are arranged at its distal segment (43) and the catching means (60) of the receiving coupling body (20) are arranged at its proximal segment (21).

3. The coupling arrangement according to claim 2, where the catching means (60, 80) are configured as a spherical part of a ball joint.

4. The coupling arrangement according to any one of the preceding claims, where the distal segment (23) of the receiving coupling body (20) and the proximal segment (41) of the insertable coupling body (40) are configured as a sealing area where a seal (52) is arranged between the segments (23, 41).

5. The coupling arrangement according to claim 4, where at least one of the segments (23, 41) is provided with a groove (50) for holding the seal (52).

6. The coupling arrangement according to any one of the preceding claims, where the catching means (60) of the receiving coupling body (20) are provided with an undercut for cooperating with the catching means (80) of the insertable coupling body (40).

7. The coupling arrangement according to any one of the claims 2 to 6, where the proximal segment (41) of the insertable coupling body (40) has a smaller clear diameter than the distal segment (43).

8. The coupling arrangement according to any one of the claims 2 to 7, where both the proximal and the distal segments (41, 43) of the insertable coupling body (40) are each generally configured as a portion of a ball of a ball joint.

9. The coupling arrangement according to any one of the claims 2 to 8, where both the proximal and the distal segments (21, 23) of the receiving coupling body (20) are each generally configured as a portion of a socket of a ball joint.

10. The coupling arrangement according to any one of the claims 2 to 9, where the distal segment (43) of the insertable coupling body (40) is configured as a portion of a ball of a ball joint and the proximal segment (41) of the insertable coupling body (40) has a generally cylindrical or rounded shape.

11. The coupling arrangement according to any one of the claims 2 to 10, where the proximal segment (21) of the receiving coupling body (20) is configured generally as a portion of a socket of a ball joint and the distal segment (23) of the receiving coupling body (20) has a generally cylindrical shape.

12. The coupling arrangement according to claim 11, where the distal segment (23) of the receiving coupling body (20) is deeper in an axial direction than an axial extension of the inserted portion (42) of the insertable coupling body (40) in a mounted state.

13. The coupling arrangement according to any one of the preceding claims, where the catching means (60, 80) are configured to establish a bayonet-type connection.

14. The coupling arrangement according to any one of the preceding claims, where locking elements (70, 90) for stopping a relative rotational movement between the coupling bodies (20, 40) are arranged at the outside or inside of the coupling bodies (20, 40).

15. A coupling body (20) for usage in a coupling arrangement (10) according to any one of the preceding claims, comprising at least two segments (21, 23), one proximal segment (21) proximal to a front end (32) and one distal segment (23) in a distance from the front end (32), being configured as a receiving coupling body (20) of the coupling arrangement (10), where a catching means (60) is arranged at its proximal segment (21), the catching means (60) being configured as a spherical socket part of a ball joint.

16. A coupling body (40) for usage in a coupling arrangement (10) according to any one of the claims 1 to 14, comprising at least two segments (41, 43), one proxy-mal segment (21) proximal to a front end (48) and one distal segment (43) in a distance from the front end (48), being configured as an insertable coupling body (40) of the coupling arrangement (10), where a catching means (80) is arranged at its distal segment (41), the catching means (80) being configured as a part of a ball of a ball joint.

17. A usage of a coupling arrangement (10) according to any one of the claims 1 to 14, for establishing a quasi-rigid connection between gas pipes, in particular for charge air ducts (110).

18. An air duct (100) for guiding air, in particular a charge air duct, in particular to an internal combustion engine, having a coupling arrangement according to one of the previous claims.
